# EUROPÄISCHE PATENTSCHRIFT

(11) **EP 2 575 405 B1**
(45) Veröffentlichungstag und Bekanntmachung des Hinweises auf die Patenterteilung: **03.05.2017**
(21) Anmeldenummer: 12194484.7
(22) Anmeldetag: 15.02.2000
(51) Int. Cl.: H04W 72/10

(54) **Betrieb eines Mobilfunknetzes unter Verwendung von Zugriffsberechtigungsdaten**
Telecommunication system with allocation of access rights for a telecommunications channel to subscriber stations of a telecommunications network
Système de télécommunications pour l'allocation de droits d'accès pour un canal de télécommunications à des stations d'utilisateur d'un réseau de télécommunications

(30) Priorität: 08.03.1999 DE 19910239
(43) Veröffentlichungstag der Anmeldung: 03.04.2013
(62) Teilanmeldung aus: 10002773.9
(73) Patentinhaber: IPCom GmbH & Co. KG, 82049 Pullach (DE)
(72) Erfinder: Fischer, Ralf, 31199 Diekholzen (DE); Hans, Martin, 31162 Bad Salzdetfurth (DE); Kowalewski, Dr. Frank, 37085 Göttingen (DE); Laumen, Josef, 85375 Neufahrn (DE); Schmidt, Gunnar, 78052 Villingen-Schwenningen (DE); Lechner, Detlef, 12101 Berlin-Tempelhof (DE); Schulz, Holger, 10587 Berlin (DE)
(74) Vertreter: Molnia, David

(56) Entgegenhaltungen:
- WO-A2-98/48576
- "Digital cellular telecommunications system (Phase 2+); Service accessibility (GSM 02.11 version 7.0.0 Release 1998)", ETSI DRAFT; 0211-700, EUROPEAN TELECOMMUNICATIONS STANDARDS INSTITUTE (ETSI), 650, ROUTE DES LUCIOLES ; F-06921 SOPHIA-ANTIPOLIS ; FRANCE, Nr. V7.0.0, 14. November 1998 (1998-11-14) , Seiten 1-14, XP014058245, [gefunden am 1998-11-14]
- ARIB: "The latest MAC sublayer specification of ARIB Â MAC Sublayer Specification for 3G Mobile System (Ver.1.0)Â", 3GPP DRAFT; MAC LAYER SPECIFICATIONS V1.0 OF ARIB, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Bd. RAN WG2, Nr. Helsinki, Finland; 19990218, 18. Februar 1999 (1999-02-18), XP050112249, [gefunden am 1999-02-18]
- ANONYMOUS: "Minutes of the L1EG meeting", CEPT/CCH/GSM/L1EG, 31. August 1987 (1987-08-31), - 2. September 1987 (1987-09-02), Seite 12 PP, XP002615156, CEPT
- "Digital cellular telecommunications system (Phase 2+); General Packet Radio Service (GPRS); Mobile Station (MS) - Base Station System (BSS) interface; Radio Link Control/ Medium Access Control (RLC/MAC) protocol (GSM 04.60 version 6.2.0 Release 1997)", 3GPP STANDARD; GSM 04.60, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V6.2.0, 1 October 1998 (1998-10-01), pages 1-181, XP050358536,

## Beschreibung

Die Erfindung geht von einer Mobilstation zum Betrieb in einem Mobilfunknetz und einem System nach der Gattung der unabhängigen Ansprüche aus.

Aus der nicht vorveröffentlichten deutschen Patentanmeldung DE198 38832 A1 ist bereits ein Verfahren zur Zugriffskontrolle auf einen Telekommunikationskanal eines Telekommunikationsnetzes für mindestens eine Teilnehmerstation des Telekommunikationsnetzes bekannt, wobei Informationssignale an die mindestens eine Teilnehmerstation übertragen werden.

Die GSM 04.60 V6.2.0 (1998-10) offenbart ein Verfahren zur Zugangsberechtigung mehrerer Mobilstationen zu einem Mobilfunktelekommunikationsnetz in Abhängigkeit von Nutzerklassen und zu einem Telekommunikationskanal des Mobilfunknetzes in Abhängigkeit eines Persistenzschwellwertes.

Die GSM 02.11 V.7.0.0 (1998-10) weitere Informationen zu Nutzerklassen und entsprechenden Kanalzugangsberechtigungen von Mobilstationen.

Das Dokument CEPT/CCH/GSM/L1 EG WP3 138/(87): "Minutes of the L1EG meeting" ist ein Sitzungsprotokoll einer Expertengruppe, die vom 31. August - 2. September 1987 tagte und einen neuen Telekommunikationsstandard zu entwerfen hatte. Dieses Dokument erwägt in Anhang 5, dass es Gruppen oder Dienste geben könnte, die einen bevorzugten Zugriff auf ein Telekommunikationssystem erhalten sollen.

### Vorteile der Erfindung

Die erfindungsgemäße Mobilstation und das erfindungsgemäße System mit den Merkmalen der unabhängigen Ansprüche haben demgegenüber den Vorteil, dass mit den Informationssignalen Zugriffsberechtigungsdaten zur mindestens einen Teilnehmerstation übertragen werden, dass bei Empfang der Zugriffsberechtigungsdaten in einer Auswerteeinheit der mindestens einen Teilnehmerstation geprüft wird, ob die Zugriffsberechtigungsdaten einen Zugriffsschwellwert umfassen, wobei der Zugriffsschwellwert mit einer Zufallszahl oder einer Pseudozufallszahl verglichen wird, und dass das Zugriffsrecht auf einen Telekommunikationskanal der mindestens einen Teilnehmerstation in Abhängigkeit des Vergleichsergebnisses, vorzugsweise unter der Bedingung, dass die Zufallszahl oder die Pseudozufallszahl größer oder gleich dem Zugriffsschwellwert ist, zugeteilt wird. Vorteilhaft ist, wenn auf diese Weise eine zufällige Verteilung der Zugangsberechtigung zu diesem Telekommunikationskanal für eine oder mehrere Teilnehmerstationen realisiert wird. Diese Zugriffskontrolle nimmt ein Minimum an Übertragungskapazität für die Übertragung der Informationssignale in Anspruch, da sie lediglich durch Übertragung des Zugriffsschwellwertes bewirkt wird.

Durch die in den Unteransprüchen aufgeführten Maßnahmen sind vorteilhafte Weiterbildungen und Verbesserungen der im unabhängigen Anspruch 1 angegebenen Mobilstation und des in Anspruch 4 angegebenen Systems möglich.

Besonders vorteilhaft ist es, dass in der Auswerteeinheit der mindestens einen Teilnehmerstation geprüft wird, ob die Zugriffsberechtigungsdaten Zugriffsberechtigungsinformationen mit Zugriffsklasseninformationen für mindestens eine vorgegebene Nutzerklasse umfassen, wobei in diesem Fall und unter der Voraussetzung, dass die mindestens eine Teilnehmerstation der mindestens einen vorgegebenen Nutzerklasse zugeordnet ist, der Zugriff auf einen Telekommunikationskanal der mindestens einen Teilnehmerstation in Abhängigkeit des Zugriffsklasseninformation für diese Nutzerklasse erteilt wird. Auf diese Weise können Teilnehmerstationen einer vorgegebenen Nutzerklasse selbst dann zur Nutzung des Telekommunikationskanals zugelassen werden, wenn sie aufgrund der zufälligen Verteilung mittels Zugriffsschwellwert nicht zum Zugriff auf diesen Telekommunikationskanal berechtigt wären. So können beispielsweise Teilnehmerstationen von Notdiensten, wie der Polizei oder der Feuerwehr einer solchen vorgegebenen Nutzerklasse zugeordnet sein, die dann unabhängig von der zufälligen Verteilung durch entsprechende Zugriffsschwellwertinformationen priorisiert auf den Telekommunikationskanal zugreifen können.

Ein weiterer, jedoch nicht mehr mit den erteilten Ansprüchen beanspruchter Vorteil besteht darin, dass in der Auswerteeinheit der mindestens einen Teilnehmerstation geprüft wird, ob die Zugriffsberechtigungsdaten Prioritätsinformationen in Form eines Prioritätsschwellwertes umfassen, wobei in diesem Fall und unter der Voraussetzung, dass die mindestens eine Teilnehmerstation einer Prioritätsklasse mit einem Prioritätswert zugeordnet ist, der Prioritätswert mit dem Prioritätsschwellwert verglichen wird, und der Zugriff auf einen Telekommunikationskanal der mindestens einen Teilnehmerstation in Abhängigkeit des Vergleichsergebnisses, vorzugsweise unter der Bedingung, dass der Prioritätswert größer oder gleich dem Prioritätsschwellwert ist, erteilt wird. Auf diese Weise kann unter den zufällig für den Zugriff auf diesen Telekommunikationskanal berechtigten Teilnehmerstationen zusätzlich eine weitere Auswahl getroffen werden, die Teilnehmerstationen höherer Priorität für den Zugriff auf diesen Telekommunikationskanal bevorzugt. Auch auf diese Weise können Teilnehmerstationen von Notdiensten, wie der Polizei oder der Feuerwehr priorisiert werden, allerdings in Abhängigkeit der zufälligen Verteilung mittels Zugriffsschwellwert.

Ein weiterer, jedoch nicht mehr mit den erteilten Ansprüchen beanspruchter Vorteil, besteht darin, dass in der Auswerteeinheit der mindestens einen Teilnehmerstation geprüft wird, ob die Zugriffsberechtigungsdaten Teilnehmerdiensteinformationen umfassen, die für vom Telekommunikationsnetz angebotene Telekommunikationsdienste angeben, ob der Zugriff auf einen Telekommunikationskanal für die Anforderung eines solchen Telekommunikationsdienstes freigegeben ist. Für jede der nach den oben genannten Kriterien zugriffsberechtigten Nutzerklassen wird zusätzlich festgelegt, welche Telekommunikationsdienste über den Telekommunikationskanal angefordert werden können. Auf diese Weise wird wiederum Übertragungskapazität für die Übertragung der Informationssignale eingespart, da nicht von verschiedenen - nach den obigen Kriterien - zugriffsberechtigten Nutzerklassen unterschiedliche Telekommunikationsdienste angefordert werden können, sondern für jede dieser vorausgewählten Teilnehmerstationen lediglich die spezifizierten Telekommunikationsdienste über diesen Telekommunikationskanal angefordert werden können. Somit muss nur ein Minimum an Dienstinformationen mit den Informationssignalen übertragen werden.

Ein weiterer, jedoch nicht mehr mit den erteilten Ansprüchen beanspruchter Vorteil, besteht darin, dass in der Auswerteeinheit der mindestens einen Teilnehmerstation geprüft wird, ob die Zugriffsberechtigungsdaten eine Auswerteinformation umfassen, die angibt, ob die Zugriffsberechtigungsdaten entweder einen Zugriffsschwellwert oder Zugriffsklasseninformationen umfassen, und dass die Zugriffsberechtigungsdaten entsprechend dem Prüfergebnis in der mindestens einen Teilnehmerstation ausgewertet werden. Auf diese Weise kann die für die Übertragung der Informationssignale erforderliche Übertragungskapazität weiter reduziert werden, in dem die Zugriffsberechtigungsinformationen entweder nur den Zugriffsschwellwert oder nur die Zugriffsklasseninformationen, jedoch nicht beides zusammen umfassen.

Ein weiterer Vorteil, besteht darin, dass der Zugriff auf diesen Telekommunikationskanal der mindestens einen Teilnehmerstation in Abhängigkeit des Nachrichtenverkehrsaufkommens auf mindestens einem Telekommunikationskanal freigegeben wird. Auf diese Weise lässt sich eine optimale Verteilung der Ressourcen des Telekommunikationsnetzes auf die Teilnehmerstationen bei bestmöglicher Nutzung der Übertragungskapazität erzielen.

### Zeichnung

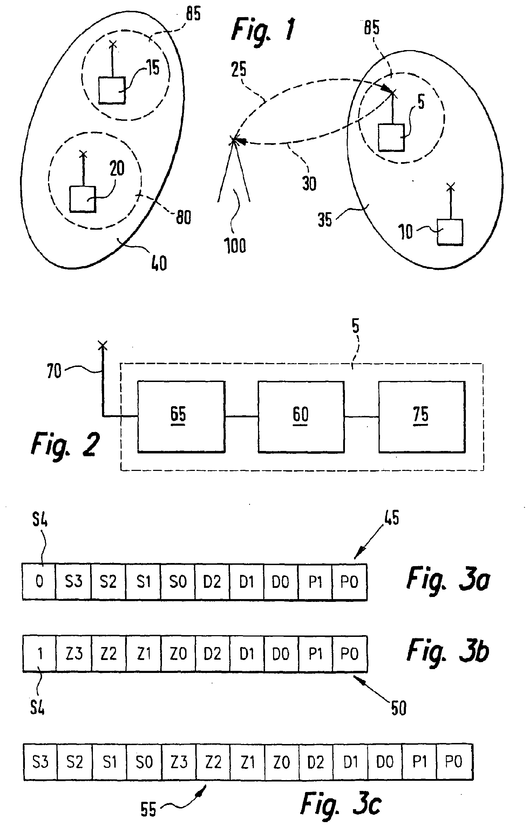

Ausführungsbeispiele der Erfindung sind in der Zeichnung dargestellt und in der nachfolgenden Beschreibung näher erläutert. Es zeigen Figur 1 einen Ausschnitt aus einem Telekommunikationsnetz,
Figur 2 ein Blockschaltbild einer erfindungsgemäßen Teilnehmerstation,
Figur 2a ein erstes Bitmuster für die Zuteilung des Zugriffs auf einen Telekommunikationskanal,
Figur 3b ein zweites Bitmuster für die Zuteilung des Zugriffs auf einen Telekommunikationskanal,
Figur 3c ein drittes Bitmuster für die Zuteilung des Zugriffs auf einen Telekommunikationskanal, und Die Figuren 4a, 4b und 4c einen Ablaufplan für die Funktionsweise einer Auswerteeinheit der erfindungsgemäßen Teilnehmerstation.

### Beschreibung der Ausführungsbeispiele

In Figur 1 kennzeichnet 100 eine Basisstation eines als Mobilfunknetz ausgebildeten Telekommunikationsnetzes. Ein solches Mobilfunknetz ist normalerweise zellular aufgebaut, wobei jede Funkzelle des Mobilfunknetzes von einer Basisstation versorgt wird. Die Basisstation 100 spannt also eine Funkzelle im Mobilfunknetz auf, in der gemäß Figur 1 eine erste Teilnehmerstation 5, eine zweite Teilnehmerstation 10, eine dritte Teilnehmerstation 15 und eine vierte Teilnehmerstation 20 angeordnet sind. Bei den vier Teilnehmerstationen 5, 10, 15, 20 soll es sich beispielhaft um Mobilstationen, wie beispielsweise Mobiltelefone, Funktelefone, oder dergleichen handeln. Bei den hier beschriebenen Ausführungsbeispielen sollen also die erste Teilnehmerstation 5 als erste Mobilstation, die zweite Teilnehmerstation 10 als zweite Mobilstation, die dritte Teilnehmerstation 15 als dritte Mobilstation und die vierte Teilnehmerstation 20 als vierte Mobilstation ausgebildet sein.

Ein Netzbetreiber des Mobilfunknetzes bietet eine vorgegebene Anzahl von Telekommunikationsdiensten an. Im folgenden sollen beispielhaft drei verschiedene Telekommunikationsdienste vom Netzbetreiber angeboten werden können. Dabei kann als ein erster Telekommunikationsdienst beispielsweise ein Dienst für die Versendung kleiner Datenpakete vorgesehen sein, der von den Mobilstationen 5,10,15,20 benutzt werden kann, um kleine Datenpakete an die Basisstation 100 über einen wahlfreien Zugriffskanal 30, der im folgenden beispielhaft als RACH (Random Access Channel) ausgebildet sein soll, zu übertragen. Als ein zweiter Telekommunikationsdienst kann beispielsweise ein Dienst zum Versenden größerer Paketdaten vorgesehen sein, bei dem der RACH 30 von den Mobilstationen 5,10,15,20 benutzt werden darf, um gesonderte Datenkanäle zur Paketdatenübertragung anzufordern. Als ein dritter Telekommunikationsdienst kann beispielsweise ein Dienst zur Sprach-, bzw. leitungsgebundenen Datenübertragung vorgesehen sein, bei dem der RACH 30 von den Mobilstationen 5, 10, 15, 20 benutzt werden darf, um Sprach- und/oder Datenübertragungen einzuleiten oder fortzusetzen.

Die drei Telekommunikationsdienste können einzeln und/oder in beliebiger Kombination den Mobilstationen 5,10,15,20 vom Netzbetreiber erlaubt werden.

Die Telekommunikationsdienste müssen dabei von der entsprechenden Mobilstation über die Basisstation 100 beim Netzbetreiber angefordert werden. Die Telekommunikationsdienste werden üblicherweise über den RACH 30 von den Mobilstationen 5,10,15,20 angefordert oder zugänglich gemacht. Über den RACH 30 können in der Regel Nachrichten von mehreren Mobilstationen an die Basisstation 100 gesendet werden. Auf diese Weise können Nachrichten verschiedener Mobilstationen miteinander kollidieren. Die Basisstation 100 bestätigt daher ordnungsgemäß empfangene Nachrichten, in dem sie entsprechende Bestätigungs- oder Quittierungsinformationen auf einem anderen, in Figur 1 nicht dargestellten Kanal, beispielsweise einem Paging-Kanal, an diejenigen Mobilstationen zurücksendet, deren Nachrichten sie ordnungsgemäß empfangen hat.

Für den Fall, dass die Nachricht einer Mobilstation auf dem RACH 30 mit einer anderen Nachricht kollidiert, findet kein ordnungsgemäßer Empfang dieser Nachricht in der Basisstation 100 statt, so dass die Basisstation 100 auch keine Bestätigungsinformation an die entsprechende Mobilstation zurücksenden kann. Die Mobilstation sendet daher meist nach einer vorgegebenen Zeit, in der keine Bestätigungsinformation von der Basisstation 100 empfangen wurde, die Nachricht erneut über den RACH 30 zur Basisstation 100. Auf diese Weise droht eine Überlastung des RACH 30, der somit die benutzerinitiierte Anforderung von Telekommunikationsdiensten durch die entsprechenden Mobilstationen durch seine begrenzte Übertragungskapazität beschränkt.

Eine Überlastung des RACH 30 kann dadurch vermieden werden, dass der Netzbetreiber den Zugriff auf den RACH für die einzelnen Mobilstationen 5,10,15,20 gezielt einschränkt. Dabei kann der Zugriff auf den RACH beispielsweise nur für bestimmte Nutzerklassen von Mobilstationen vorübergehend oder dauerhaft bevorrechtigt erlaubt werden. Gemäß den beschriebenen Ausführungsbeispielen nach Figur 1 ist eine erste Nutzerklasse 35 vorgesehen, die die erste Mobilstation 5 und die zweite Mobilstation 10 umfasst. Weiterhin ist eine zweite Nutzerklasse 40 vorgesehen, die die dritte Mobilstation 15 und die vierte Mobilstation 20 umfasst. Es kann jedoch auch vorgesehen sein, für jede Mobilstation eine eigene Nutzerklasse vorzusehen. Es könnte auch vorgesehen sein, Nutzerklassen mit unterschiedlicher Anzahl von Mobilstationen vorzusehen. Weiterhin ist es möglich, mehr als zwei Mobilstationen in einer Nutzerklasse vorzusehen. Der Netzbetreiber kann nun den einzelnen Mobilstationen in Abhängigkeit ihrer Zugehörigkeit zu einer der beiden Nutzerklassen 35,40 der Zugriff auf den RACH freigegeben werden. Das bedeutet, dass den beiden Mobilstationen 5,10 der ersten Nutzerklasse 35 gleiche Rechte für das Senden auf dem RACH zugeteilt werden. In analoger Weise werden auch den Mobilstationen 15,20 der zweiten Nutzerklasse 40 gleiche Rechte für das Senden auf dem RACH zugeteilt.

Der Netzbetreiber informiert die einzelnen Mobilstationen 5,10,15,20 durch Informationssignale, die von der Basisstation 100 an die jeweilige Mobilstation 5,10,15,20 übertragen werden, welche Rechte für das Senden auf dem RACH der entsprechenden Mobilstation 5,10,15,20 zugeteilt sind. Dies wird stellvertretend für alle Mobilstationen 5,10,15,20 im folgenden anhand der Zuteilung der Rechte für das Senden auf dem RACH an die erste Mobilstation 5 gemäß Figur 1 beschrieben.

Dabei überträgt die Basisstation 100 zu vorgegebenen Zeiten Informationssignale an die erste Mobilstation 5. Die Informationssignale können dabei gemäß Figur 1 über einen Signalisierungskanal 25, der im folgenden beispielhaft als Broadcast Control Channel BCCH ausgebildet sein soll, übertragen werden. Dabei wird mit den Informationssignalen zu den vorgegebenen Zeiten jeweils ein Bitmuster an die erste Mobilstation 5 übertragen. Das Bitmuster kann in einer ersten Ausführungsform Informationen darüber enthalten, zu welchem Zweck und für welche Mobilstationen der Zugriff auf den RACH erlaubt ist. Bei den möglichen Zugriffszwecken handelt es sich dabei beispielsweise um die bereits oben beschriebenen Fälle, wie das Versenden kleiner Datenpakete, die Kanalanforderung für größere Paketdaten und die Kanalanforderung für Sprach-/Datendienste. Ein weiterer möglicher Zugriffszweck ist jedoch auch das Versenden von Signalisierungsinformationen von der Teilnehmerstation zur Basisstation, die dem Aufrechterhalten und/oder der Modifikation von bereits bestehenden Verbindungen dienen. Da das von der Basisstation gesendete Bitmuster nicht nur zur ersten Mobilstation 5, sondern auch zu allen anderen Mobilstationen 10,15,20 ebenfalls über den Signalisierungskanal 25, der wie beschrieben als BCCH und damit als Punkt-zu-Mehrpunkt-Kanal ausgebildet ist, so dass alle Mobilstationen die gleichen Informationen zur gleichen Zeit erhalten, gesendet wird, um diesen die ihnen zugeteilten RACH-Zugriffsrechte mitzuteilen, umfasst das Bitmuster die zugeteilten Zugriffsrechte für jede Nutzerklasse 35,40.

Eine zufällige Streuung der Zugriffsberechtigung auf den RACH 30 über einen Teil der Mobilstationen 5,10,15,20 wird erreicht, indem auf dem BCCH 25 ein Zugriffsschwellwert S gesendet wird. In Figur 2 ist beispielhaft ein Blockschaltbild der ersten Mobilstation 5 dargestellt. Die erste Mobilstation 5 umfasst dabei eine Sende-/Emfpangseinheit 65 mit einer Sende-/Empfangsantenne 70. Die Sende-/Emfpangseinheit 65 ist außerdem an eine Auswerteeinheit 60 angeschlossen, die auf eine Zugriffsberechtigungskarte 75, beispielsweise eine SIM-Karte (Subscriber-Identity-Module) zugreift. In Figur 2 sind nur die für die Beschreibung der Erfindung erforderlichen Elemente der ersten Mobilstation 5 dargestellt. Das erfindungsgemäße Verfahren wird im folgenden beispielhaft anhand der ersten Mobilstation 5 beschrieben, wobei die zweite Mobilstation 10, die dritte Mobilstation 15 und die vierte Mobilstation 20 ebenfalls den gemäß Figur 2 beschriebenen Aufbau aufweisen. Die erste Mobilstation 5 empfängt mittels ihrer Sende-/Empfangseinheit 65 die über den BCCH 25 übertragenen Informationssignale, die den Zugriffsschwellwert S umfassen. Der Zugriffsschwellwert S wird der Auswerteeinheit 60 zugeführt. Die Auswerteeinheit 60 zieht vor jedem Zugriff der ersten Mobilstation 5 auf dem RACH 30 eine Zufalls- oder Pseudozufallszahl R und prüft, ob die Zufalls- oder Pseudozufallszahl R mindestens so gross wie der Zugriffsschwellwert S ist. Nur dann ist ein Zugriff auf den RACH 30 erlaubt. Dabei gilt beispielsweise, dass der Zugriffsschwellwert S aus dem Intervall {0,1...n+1} und die Zufalls- oder Pseudozufallszahl R aus dem Intervall {0,1...n} ist. Dadurch kann die Nutzung des RACH 30 mit dem Zugriffsschwellwert S = n +1 für alle Mobilstationen 5,10,15,20 eingeschränkt, das heißt der Zugriff auf den RACH 30 verhindert werden. Wird die Zufalls- oder Pseudozufallszahl R mittels einer gleich verteilten Zufallsfunktion aus dem entsprechenden Intervall {0,1,...n} gezogen, so ist die Wahrscheinlichkeit zum Zugriff auf den RACH 30 für alle Mobilstationen 5,10,15,20 gleich.

Im folgenden wird anhand der Figuren 3a und 3b ein erstes Ausführungsbeispiel beschrieben. Zugriffsberechtigungsdaten 45, 50, 55 sind im ersten Ausführungsbeispiel und den weiteren Ausführungsbeispielen als Bitmuster ausgeführt, wobei die Zugriffsberechtigungsdaten 45, 50, 55 mit den Informationssignalen an die Mobilstationen 5, 10, 15, 20 übertragen werden und wobei die Zugriffsberechtigungsdaten 45, 50, 55 die Informationen über die Rechte zur Nutzung des RACH 30 umfassen. Im ersten Ausführungsbeispiel werden an jede Mobilstation 5, 10, 15, 20 Informationssignale übertragen, die jeweils ein Bitmuster, bestehend aus 10 Bits, umfassen. Dabei ist ein erstes Bit ein Auswertebit S4. Die Figur 3a zeigt den Fall, in dem das Auswertebit S4 = 0 ist. Das zweite Bit ist dann ein erstes Zugriffsschwellwert-Bit S3, dass dritte Bit ein zweites Zugriffsschwellwert-Bit S2, dass vierte Bit ein drittes Zugriffsschwellwert-Bit S1 und das fünfte Bit ein viertes Zugriffsschwellwert-Bit S0. Mit den vier Zugriffsschwellwert-Bits S3, S2, S1, S0 lassen sich an diesem Beispiel 2<4> = 16 Zugriffsschwellwerte S vom Netzbetreiber an die Mobilstationen 5,10,15,20 übertragen, wobei über den BCCH 25 zu allen Mobilstationen 5,10,15,20 der gleiche Zugriffsschwellwert S übertragen wird. Je nach dem aktuellen Nachrichtenverkehrsaufkommen im Telekommunikationsnetz kann der Zugriffsschwellwert S dabei größer oder kleiner eingestellt, dass heißt verändert bzw. angepasst werden. Bei 16 möglichen Zugriffsschwellwerten S können maximal 16 Zugriffsklassen für die Mobilstationen 5,10,15,20 gebündelt werden, wobei die Zugehörigkeit einer Mobilstation 5,10,15,20 zu einer der 16 Zugriffsklassen vom Ziehen einer von 16 Zufalls- oder Pseudozufallszahlen R in der jeweiligen Auswerteeinheit der Mobilstation 5,10,15,20 abhängt und sich somit bei jedem neuen Ziehvorgang ändern kann. Das sechste Bit im ersten Bitmuster 45 ist ein erstes Telekommunikationsdienst-Bit D2, das siebte Bit ist ein zweites Telekommunikationsdienst-Bit D1 und das achte Bit ist ein drittes Telekommunikationsdienst-Bit D0. Das erste Telekommunikationsdienst-Bit D2 gibt an, ob der erste Telekommunikationsdienst genutzt werden kann, das zweite Telekommunikationsdienst-Bit D1 gibt an, ob der zweite Telekommunikationsdienst genutzt werden kann und das dritte Telekommunikationsdienst-Bit D0 gibt an, ob der dritte Telekommunikationsdienst genutzt werden kann. Es kann vereinbart werden, das ein Telekommunikationsdienst dann nutzbar ist, wenn das zugehörige Telekommunikationsdienst-Bit gesetzt ist.

Die Mobilstationen 5,10,15,20 können zusätzlich in sogenannte Prioritätsklassen 80,85 eingeteilt sein. Gemäß Figur 1 ist die vierte Mobilstation 20 in eine erste Prioritätsklasse 80 eingeteilt. Die erste Mobilstation 5 und die dritte Mobilstation 15 sind gemäß Figur 1 in eine zweite Prioritätsklasse 85 eingeteilt. Die zweite Mobilstation 10 ist gemäß Figur 1 in keine Prioritätsklasse eingeteilt. Das neunte Bit des ersten Bitmusters 45 ist ein erstes Prioritätsbit P1 und das zehnte Bit des ersten Bitmusters 45 ist ein zweites Prioritätsbit P0. Somit kann über das erste Bitmuster 45 ein Prioritätsschwellwert P mit vier verschiedene Werten zu den Mobilstationen 5,10,15,20 übertragen werden. Es sind daher maximal vier Prioritätsklassen mit jeweils unterschiedlicher Priorität durch den Prioritätsschwellwert P unterscheidbar. Gemäß Figur 1 sind nur zwei der gemäß Figur 3a möglichen vier Prioritätsklassen dargestellt. So könnte beispielsweise die erste Prioritätsklasse 80 eine Prioritätsklasse für Notdienste wie beispielsweise der Polizei oder der Feuerwehr mit dem höchsten Prioritätswert 4 darstellen. Die zweite Prioritätsklasse 85 könnte beispielsweise eine Prioritätsklasse für einen städtischen Energieversorger mit einem etwas niedrigeren Prioritätswert 3 darstellen. Falls eine Mobilstation 5,10,15,20 zu einer Prioritätsklasse gehört, so ist der zugehörige Prioritätswert auf der Zugangsberechtigungskarte 75 abgelegt und kann dort von der Auswerteeinheit 60 ermittelt werden. Von den Mobilstationen 5,10,15,20, die eine Zufalls- oder Pseudozufallszahl R größer oder gleich den Zugriffsschwellwert S ziehen, erhalten dann nur diejenigen Zugriffsberechtigung auf den RACH 30, deren Prioritätswert auch größer oder gleich dem Prioritätsschwellwert P ist. Im Falle der zweiten Mobilstation 10, die keiner Prioritätsklasse zugeordnet ist, kann dabei vorgesehen sein, dass ihre Auswerteeinheit einen Zufalls- oder Pseudozufallsprioritätswert aus den vier möglichen Prioritätswerten zieht und den gezogenen Prioritätswert mit den übertragenen Prioritätsschwellwert P vergleicht und die Zugriffsberechtigung für den RACH 30 erhält, wenn der gezogene Zufalls- oder Pseudozufallsprioritätswert größer oder gleich dem Prioritätsschwellwert P ist. Vorausgesetzt ist dabei, dass auch die von der Auswerteeinheit der zweiten Mobilstation 10 gezogenen Zufalls- oder Pseudozufallszahl R größer oder gleich dem Zugriffsschwellwert S ist. Es kann jedoch auch vorgesehen sein, dass die Mobilstationen, die keiner Prioritätsklasse angehören, keinen Vergleich mit dem Prioritätsschwellwert P durchführen müssen, sondern lediglich eine Zufalls- oder Pseudozufallszahl R ziehen müssen, die größer oder gleich dem Zugriffsschwellwert S ist, um auf den RACH 30 zugreifen zu dürfen. Eine Mobilstation ist dann keiner Prioritätsklasse zugeordnet, wenn auf der eingeschobenen Zugangsberechtigungskarte 75 kein Prioritätswert abgelegt ist.

Es kann auch vorgesehen sein, dass in einem Speicher der Auswerteeinheit ein vorgegebener Prioritätswert abgespeichert ist, der einem der vier möglichen Prioritätswerte entspricht. Für den Fall, dass die Auswerteeinheit 60 auf der Zugangsberechtigungskarte 75 keinen Prioritätswert ermittelt, kann sie den vorgegebenen Prioritätswert zum Vergleich mit dem Prioritätsschwellwert P in der beschriebenen Weise verwenden.

In Figur 3b ist ein zweites Bitmuster 50 mit ebenfalls einer Bitlänge von 10 Bit dargestellt, wobei der Aufbau des zweiten Bitmuster 50 dem Aufbau des ersten Bitmusters 45 entspricht mit Ausnahme der Tatsache, dass das Auswertebit S4 auf 1 gesetzt ist und daher das zweite Bit, das dritte Bit, das vierte Bit und das fünfte Bit des zweiten Bitmusters 50 nicht mehr als Schwellwertbits sondern als Zugriffsklassenbits definiert sind. So ist das zweite Bit des zweiten Bitmusters 50 ein erstes Zugriffsklassenbit Z3, das dritte Bit des zweiten Bitmusters 50 ein zweites Zugriffsklassenbit Z2, das vierte Bit des zweiten Bitmusters 50 ein drittes Zugriffsklassenbit Z1 und das fünfte Bit des zweiten Bitmusters 50 ein viertes Zugriffsklassenbit Z0. Das erste Zugriffsklassenbit Z3 steht für die erste Nutzerklasse 35, das zweite Zugriffsklassenbit Z2 steht für die zweite Nutzerklasse 40, das dritte Zugriffsklassenbit Z1 steht für eine dritte, in Figur 1 nicht dargestellte Nutzerklasse und das vierte Zugriffsklassenbit Z0 steht für eine vierte in Figur 1 ebenfalls nicht dargestellt Nutzerklasse. Die Zugriffsklassenbits werden in ihrer Gesamtheit auch als Zugriffsklasseninformationen bezeichnet.
Gemäß Figur 1 sind alle Mobilstationen 5,10,15,20 der ersten Nutzerklasse 35 oder der zweiten Nutzerklasse 40 zugeordnet. Weitere, in Figur 1 nicht dargestellte Mobilstationen können ebenfalls der ersten Nutzerklasse 35 oder der zweiten Nutzerklasse 40 zugeordnet sein. Sie können aber auch der dritten Nutzerklasse oder der vierten Nutzerklasse oder gar keiner Nutzerklasse zugeordnet sein. Wenn ein Zugriffsklassenbit im zweiten Bitmuster 50 den Wert 0 hat, dass heißt nicht gesetzt ist, so dürfen alle Mobilstationen der zugeordneten Nutzerklasse auf den RACH 30 zugreifen.

Wenn ein Zugriffsklassenbit des zweiten Bitmusters 50 auf 1 gesetzt ist, so darf keine Mobilstation der zugeordneten Nutzerklasse auf den RACH 30 zugreifen.

Alle Mobilstationen, die auf den RACH 30 zugreifen dürfen, können diejenigen Telekommunikationsdienste nutzen, deren zugeordnete Telekommunikationsdienstbits im ersten Bitmuster 45 bzw. im zweiten Bitmuster 50 gesetzt sind.

Es kann auch vorgesehen sein, dass in einem Speicher der Auswerteeinheit ein vorgegebener Prioritätswert abgespeichert ist, der einem der vier möglichen Prioritätswerte entspricht. Für den Fall, dass die Auswerteeinheit 60 auf die Zugangsberechtigungskarte 75 keinen Prioritätswert ermittelt, kann sie den vorgegebenen Prioritätswert zum Vergleich mit dem Prioritätsschwellwert P in der beschriebenen Weise verwenden.

Die Zugehörigkeit zu einer Nutzerklasse entnimmt die Auswerteeinheit der entsprechenden Mobilstation ebenfalls von der Zugangsberechtigungskarte 75. Ist dort keine Nutzerklasse gespeichert, so erkennt die Auswerteeinheit der entsprechenden Mobilstation, dass diese keiner Nutzerklasse angehört.

Wenn das Auswertebit S4 auf 1 gesetzt ist, ist kein Zugriff von Mobilstationen auf den RACH 30 möglich, die keiner Nutzerklasse angehören.

Im folgenden wird am Beispiel für ein mit dem Informationssignal übertragenes Bitmuster der Bitlänge von 10 Bit beschrieben. Bei diesem Beispiel wird die Bitfolge "auf 0 1000 011 01" an die Mobilstationen 5,10,15,20 von der Basisstation 100 über den BCCH 25 gesendet. Das bedeutet, dass die Mobilstationen, die einer Nutzerklasse zugeordnet sind, wie Mobilstationen behandelt werden, die keiner Nutzerklasse zugeordnet sind, da das Auswertebit S4 nicht gesetzt ist. Durch die Zugriffsschwellwert-Bits S3, S2, S1, S0 wird der Zugriffsschwellwert S binär kodiert und durch die Prioritätsbits P1, P0 wird der Prioritätsschwellwert P binär kodiert. Für den Zugriffsschwellwert S ergibt sich somit ein Wert von 8 und für den Prioritätsschwellwert P ein Wert von 1. Ist eine Mobilstation nach Auswertung von P und S zugriffsberechtigt, so darf sie den RACH jedoch lediglich zur Kanalanforderung für größere Paketdatendienste und für Sprach-/Datendienste nutzen. Aufgrund der obigen Einstellung für die Dienstinformation ist es solchen Mobilstationen NICHT erlaubt, den RACH für die Versendung kleiner Datenpakete zu nutzen.
Das zweite, dritte, vierte und fünfte Bit des ersten Bitmusters 45 bzw. des zweiten Bitmusters 50 stellen Zugriffsberechtigungsinformationen dar, die beim ersten Bitmuster 45 den Zugriffsschwellwert S und beim zweiten Bitmuster 50 die Zugangsberechtigung für die vier Nutzerklassen angeben. Das erste Bit bestimmt dabei, ob das zweite bis fünfte Bit gemäß dem ersten Bitmuster 45 oder gemäß dem zweiten Bitmuster 50 interpretiert wird.

In einem zweiten Ausführungsbeispiel wird in Fig 3c ein drittes Bitmuster 55 mit den Informationssignalen von der Basisstation 100 zu den Mobilstationen 5,10,15,20 übertragen, dass eine Bitlänge von 13 Bit aufweist. Das dritte Bitmuster 55 weist kein Auswertebit S4 auf und umfasst daher sowohl die Zugriffsschwellwert-Bits S3,S2,S1,S0 als auch die Zugriffsklassenbits Z3,Z2,Z1,Z0. Zusätzlich umfasst das dritte Bitmuster 55 wie auch das erste Bitmuster 45 und das zweite Bitmuster 50 die Telekommunikationsdienstbits D2,D1,D0 und die Prioritätsbits P1,P0. Mobilstationen, die einer Nutzerklasse angehören, für die das zugehörigen Zugriffsklassenbit = 0 ist, können unabhängig vom Zugriffsschwellwert S und vom Prioritätsschwellwert P und damit ggf. ohne deren Auswertung in der Auswerteeinheit 60 auf den RACH 30 zugreifen. Mobilstationen, die einer Nutzerklasse angehören, deren zugeordnetes Zugriffsklassenbit auf 1 gesetzt ist, sowie Mobilstationen, die keiner Nutzerklasse angehören, müssen zur Ermittlung ihrer Zugriffsberechtigung auf den RACH 30 die bereits im ersten Ausführungsbeispiel beschriebenen Zugriffsschwellwert - und ggf. zusätzlich die im ersten Ausführungsbeispiel beschriebenen Prioritätsschwellwertauswertung durchführen. Als Beispiel wird die folgende Bitfolge betrachtet: "1000 0110 011 01". Dies bedeutet, dass eine Zugriffsschwelle S = 8 gewählt wurde, dass die Mobilstationen der ersten Nutzerklasse 35 und der vierten, in Figur 1 nicht dargestellten Nutzerklasse unabhängig von einer Auswertung des Zugriffsschwellwertes S und ggf. des Prioritätsschwellwertes P auf den RACH 30 zugreifen dürfen, dass die Mobilstationen der zweiten Nutzerklasse 40 und der in Figur 1 nicht dargestellten dritten Nutzerklasse nicht ohne Auswertung des Zugriffsschwellwertes S und ggf. des Prioritätsschwellwertes auf den RACH 30 zugreifen dürfen. Für den Prioritätsschwellwert P ergibt sich ein Wert von 1. Die zugriffsberechtigten Mobilstationen dürfen den RACH nicht zur Versendung kleiner Datenpakte nutzen, jedoch dürfen sie auf dem RACH Kanalanforderungen für größere Paketdatendienste und Sprach-/Datendienste senden. Im Gegensatz zum ersten Ausführungsbeispiel ist es beim zweiten Ausführungsbeispiel möglich, dass neben Mobilstationen, die aufgrund ihrer Zugehörigkeit zu einer Nutzerklasse auf den RACH 30 zugreifen dürfen, auch solche Mobilstationen auf den RACH 30 zugreifen dürfen, die eine Zufalls- oder Pseudozufallszahl R größer gleich dem Zugriffsschwellwert S ziehen und ggf. einen Prioritätswert oberhalb des Prioritätsschwellwertes P aufweisen.

Im Vergleich zum ersten Bitmuster und zum zweiten Bitmuster enthalten beim dritten Bitmuster die Zugriffsberechtigungsinformationen sowohl die Zugriffsschwellwertbits S3, S2, S1, S0 als auch die Zugriffsklassenbits Z3, Z2, Z1, Z0.

Die im ersten, zweiten und dritten Bitmuster 45, 50 ,55 verwendeten Anzahlen von Bits für den Zugriffssschwellwert S, die Zugriffsklasseninformation Z0, Z1, Z2, Z3, den Prioritätsschwellwert P und die Teilnehmerdiensteinformationen D0, D1, D2 sind lediglich beispielhaft zu verstehen und können, beispielsweise zum umfangreicheren Signalisieren erhöht und zur Bandbreitenreduktion verringert werden. In diesem Fall ändert sich gegebenenfalls auch die Gesamtlänge der Bitmuster 45, 50, 55. Gegebenenfalls können einzelne der Informationskomponenten auch gänzlich ausgelassen werden.

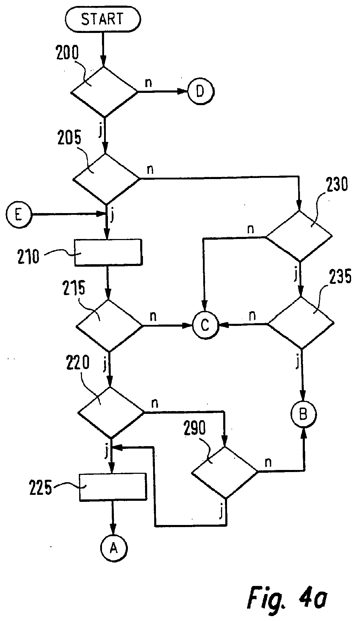

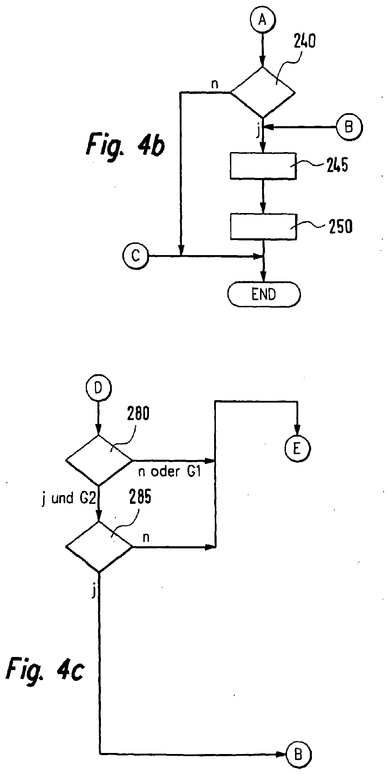

In den Figuren 4a, 4b und 4c ist ein Ablaufplan für die Funktionsweise der Auswerteeinheit 60 dargestellt. Bei einem Programmpunkt 200 prüft die Auswerteeinheit 60, ob die über den BCCH 25 empfangenen Informationssignale ein Bitmuster der Bitlänge von 10 Bit umfassen. Ist dies der Fall, so wird zu einem Programmpunkt 205 verzweigt, andernfalls wird zu einem Programmpunkt 280 verzweigt. Beim Programmpunkt 205 prüft die Auswerteeinheit 60, ob das Auswertebit S4 = 0 ist. Ist dies der Fall, so wird zu einem Programmpunkt 210 verzweigt, andernfalls wird zu einem Programmpunkt 230 verzweigt. Bei Programmpunkt 210 ermittelt die Auswerteeinheit 60 aus den Zugriffsschwellwertbits S3, S2, S1, S0 den Zugriffsschwellwert S und zieht eine Zufalls- oder Pseudozufallszahl R aus der Menge der möglichen Zugriffsschwellwerte S, wobei der größtmögliche Zugriffsschwellwert S für das Ziehen der Zufalls- oder Pseudozufallszahl R ausgenommen sein kann. Anschließend wird zu einem Programmpunkt 215 verzweigt. Bei Programmpunkt 215 prüft die Auswerteeinheit 60, ob die Zufalls- oder Pseudozufallszahl R größer oder gleich dem Zugriffsschwellwert S ist. Ist dies der Fall, so wird zu einem Programmpunkt 220 verzweigt, andernfalls wird das Programm verlassen. Bei Programmpunkt 220 prüft die Auswerteeinheit 60, ob auf der Zugangsberechtigungskarte 75 ein Prioritätswert einer zugehörigen Prioritätsklasse gespeichert ist. Ist dies der Fall, so wird zu einem Programmpunkt 225 verzweigt, andernfalls wird zu einem Programmpunkt 290 verzweigt. Bei Programmpunkt 290 prüft die Auswerteeinheit 60, ob in einem ihr zugeordneten Speicher ein vorgegebener Prioritätswert abgelegt ist. Ist dies der fall, so wird zum Programmpunkt 225 verzweigt, andernfalls wird zu einem Programmpunkt 245 verzweigt. Bei Programmpunkt 225 ermittelt die Auswerteeinheit 60 aus dem empfangenen Bitmuster den Prioritätsschwellwert P. Anschließend wird zu einem Programmpunkt 240 verzweigt. Bei Programmpunkt 240 prüft die Auswerteeinheit 60, ob der Prioritätswert größer oder gleich der Prioritätsschwelle P ist. Ist dies der Fall, so wird zum Programmpunkt 245 verzweigt, andernfalls wird das Programm verlassen. Bei Programmpunkt 245 ermittelt die Auswerteeinheit 60 aus dem Bitmuster anhand der Telekommunikationsdienstbits die nutzbaren Telekommunikationsdienste. Anschließend wird zu einem Programmpunkt 250 verzweigt. Bei Programmpunkt 250 gibt die Auswerteeinheit 60 den Zugriff der zugehörigen Mobilstation auf den RACH 30 zur Nutzung der nutzbaren Telekommunikationsdienst frei. Anschließend wird das Programm verlassen. Bei Programmpunkt 230 prüft die Auswerteeinheit 60, ob auf der Zugangsberechtigungskarte 75 die Zugehörigkeit zu einer Nutzerklasse gespeichert ist. Ist dies der Fall, so wird zu einem Programmpunkt 235 verzweigt, andernfalls wird das Programm verlassen. Bei Programmpunkt 235 prüft die Auswerteeinheit 60 anhand der Zugriffsklassenbits, ob die anhand der Zugangsberechtigungskarte 75 ermittelte Nutzerklasse der Mobilstation für den Zugriff auf den RACH 30 zulässig ist. Ist dies der Fall, so wird zu Programmpunkt 245 verzweigt, andernfalls wird das Programm verlassen. Bei Programmpunkt 280 hat die Auswerteeinheit 60 erkannt, dass ein Bitmuster mit der Bitlänge von 13 Bit empfangen wurde und prüft, ob auf der Zugangsberechtigungskarte 75 eine Zugehörigkeit der zugehörigen Mobilstation zu einer Nutzerklasse gespeichert ist. Weiterhin wird bei Programmpunkt 280 geprüft, ob die Nutzerklasse zu einer ersten Gruppe von Nutzerklassen oder zu einer zweiten Gruppe von Nutzerklassen gehört. Die erste Gruppe von Nutzerklassen wird im folgenden auch als normalprivilegiert bezeichnet. Die zweite Gruppe von Nutzerklassen wird im folgenden auch als bevorrechtigt bezeichnet. Falls bei Programmpunkt 280 erkannt wird, dass auf der Zugangsberechtigungkarte 75 eine Zugehörigkeit der zugehörigen Mobilstation zu der bevorrechtigten Nutzerklasse besteht, so verzweigt das Programm zu Programmpunkt 285. Andernfalls, d.h. falls auf der Zugangsberechtigungskarte 75 keine Zugehörigkeit der Mobilstation zu einer Nutzerklasse erkannt wird oder wenn die normalprivilegierte Nutzerklasse erkannt wird, so verzweigt das Programm zu Programmpunkt 210. Ist dies der Fall, so wird zu einem Programmpunkt 285 verzweigt, andernfalls wird zu einem Programmpunkt 210 verzweigt. Bei Programmpunkt 285 prüft die Auswerteeinheit 60 anhand der Zugriffsklassenbits bei Z3, Z2, Z1, Z0 des empfangenen Bitmusters ob die für die Mobilstation ermittelte Nutzerklasse für den Zugriff auf den RACH 30 berechtigt ist. Ist dies der Fall, so wird zu Programmpunkt 245 verzweigt, andernfalls wird zu Programmpunkt 210 verzweigt. In allen Fällen, in denen das Programm nicht ausgehend vom Programmpunkt 250 verlassen wird, wird von der Auswerteeinheit 60 keine Zugriffserlaubnis auf den RACH 30 für die zugeordnete Mobilstation 5 ermittelt. Nach der Beendigung des Programms teilt die Mobilstation dem Benutzer mit, dass der Zugriff auf den RACH 30 nicht möglich war und erwartet weitere Eingaben des Benutzers. Alternativ dazu wird durch eine in der Mobilstation realisierte Warteschleife das Programm neu durchlaufen, so dass das nachfolgende Informationssignal mit dem nachfolgenden Bitmuster abgewartet und zur Ermittlung der Zugangsberechtigung auf den RACH 30 ausgewertet wird.

Die Informationssignale werden von der Basisstation 100 zu der Mobilstation 5,10,15,20 zu vorgegebenen Zeiten, vorzugsweise in regelmäßigen Abständen übertragen. Der Netzbetreiber kann den Zugriff auf den RACH in Abhängigkeit des Nachrichtenverkehrsaufkommens im Telekommunikationsnetz und damit in Abhängigkeit einer erwarteten Auslastung des RACH 30 für die einzelnen Mobilstationen 5,10,15,20 gemäß dem beschriebenen Verfahren erlauben oder sperren. Da sich das Nachrichtenverkehrsaufkommen im Telekommunikationsnetz mit der Zeit verändert, ändert sich auch die erwartete Auslastung des RACH 30 mit der Zeit, so dass Zugriff auf den RACH in der Regel zu verschiedenen Zeiten mittels entsprechend veränderter Bitmusterbelegung den verschiedenen Mobilstationen 5,10,15,20 zugeteilt wird.

Eine Entlastung des RACH 30 kann zusätzlich dadurch erzielt werden, dass ein Wiederholungszähler und/oder ein Wiederholungsabstand vorgesehen ist. Der Wiederholungszähler gibt die maximale Anzahl der erlaubten Wiederholversuche für ein wiederholtes Absenden einer Nachricht von der entsprechenden Mobilstation über den RACH 30 an die Basisstation 100 für den Fall der Kollision mit einer Nachricht einer anderen Mobilstation an. Der Wiederholungsabstand ist ein stochastisches Maß für den zeitlichen Abstand bis zur nächsten Wiederholung der von der jeweiligen Mobilstation an die Basisstation 100 über den RACH 30 gesendeten Nachricht. Je kleiner die Anzahl der erlaubten Wiederholversuche und je größer der Wiederholungsabstand, desto größer die Entlastung des RACH 30. Der Wiederholungszähler und/oder der Wiederholungsabstand kann in regelmäßigen Zeitabständen zusammen mit dem Bitmuster der zugeteilten Zugriffsrechte den entsprechenden Mobilstationen gegebenenfalls zusammen mit weiteren funkzellenspezifischen Informationen auf dem zugehörigen Signalisierungskanal 25 mitgeteilt werden.
Das erfindungsgemäße Verfahren kann in einem Mobilfunknetz nach UMTS-Standard (Universal Mobile Telecommunication System), nach GSM-Standard, oder dergleichen realisiert werden.

Das erfindungsgemäße Verfahren ist nicht auf die Anwendung in einem Mobilfunknetz beschränkt, sondern generell in Telekommunikationsnetzen anwendbar, in denen ein Telekommunikationskanal existiert, welcher zur Anforderung von Telekommunikationsdiensten und/oder zum Versenden von Datenpaketen von mehreren Teilnehmerstationen benutzt wird, wobei das Telekommunikationsnetz beispielsweise auch ein drahtgebundenes Festnetz sein kann.

In einer anderen Ausführungsform kann es auch vorgesehen sein, dass für eine Zugangsberechtigung eine Zufallszahl oder Pseudozufallszahl R kleiner als der Zugriffsschwellwert S vorausgesetzt wird. Entsprechend kann auch für die Prioritätsprüfung mittels des Prioritätsschwellwertes P vorausgesetzt werden, dass die Zufallszahl oder die Pseudozufallszahl R kleiner als der Prioritätsschwellwert P ist.

## Patentansprüche

1. Mobilstation (5, 10, 15, 20) zum Betrieb in einem Mobilfunknetz, wobei die Mobilstation (5, 10, 15, 20) aufweist:
- Mittel zum Entnehmen einer Zugehörigkeit zu einer Nutzerklasse von einer Zugangsberechtigungskarte (75),
**dadurch gekennzeichnet, dass** die Mobilstation (5, 10, 15, 20) weiterhin aufweist:
- Mittel zum Ermitteln aus empfangenen Zugriffsklasseninformationen (Z0, Z1, Z2, Z3) einer Zugriffsklasseninformation, die der Nutzerklasse der Mobilstation (5, 10, 15, 20) zugeordnet ist,
- Mittel zum Prüfen anhand der zugeordneten Zugriffsklasseninformation, ob für die der Mobilstation zugehörigen Nutzerklasse ein von einer Basisstation (100) empfangener Zugriffsschwellwert (S) für einen Zugriff auf einen wahlfreien Zugriffskanal umfasst ist oder ob die Mobilstation aufgrund ihrer Zugehörigkeit zu der Nutzerklasse unabhängig vom Zugriffsschwellwert (S) auf den wahlfreien Zugriffskanal zugreifen darf,
- Mittel zum Ermitteln ihrer Zugriffsberechtigung auf den wahlfreien Zugriffskanal, im Falle, dass die Mobilstation nicht ohne Auswertung des Zugriffsschwellwertes (S) auf den wahlfreien Zugriffskanal zugreifen darf, mittels eines Vergleichs des Zugriffsschwellwerts (S) mit einer Zufalls- oder Pseudozufallszahl (R).

2. Mobilstation nach Anspruch 1, **dadurch gekennzeichnet, dass** die Mobilstation Mittel zum Zugreifen auf den wahlfreien Zugriffskanal aufweist, so dass im Falle, dass die Mobilstation nicht ohne Auswertung des Zugriffsschwellwertes (S) zugreifen darf, auf den wahlfreien Zugriffskanal in Abhängigkeit des Vergleichsergebnisses zugegriffen wird.

3. Mobilstation nach Anspruch 1, **dadurch gekennzeichnet, dass** die Mobilstation eine Auswerteeinheit (60) und Mittel zum Zugreifen auf den wahlfreien Zugriffskanal aufweist, so dass im Falle, dass die Mobilstation aufgrund ihrer Zugehörigkeit zu der Nutzerklasse auf den wahlfreien Zugriffskanal zugreifen darf, sich ihre Zugriffsberechtigung unabhängig vom Zugriffsschwellwert (S) und damit ohne dessen Auswertung in der Auswerteeinheit (60) ergibt.

4. System mit einer Basisstation (100) und mindestens einer Mobilstation (5, 10, 15, 20), wobei die Basisstation (100) Mitteln zum Senden von Zugriffsberechtigungsdaten (45, 50, 55) mit Informationssignalen an Mobilstationen (5, 10, 15, 20) in einer von ihr aufgespannten Zelle aufweist,
wobei jede Mobilstation (5, 10, 15, 20) einer Nutzerklasse (35, 40) zugehören kann, **dadurch gekennzeichnet, dass** das System derart ausgestaltet ist, dass die Zugriffsberechtigungsdaten (45, 50, 55)
Zugriffsklasseninformationen (Z0, Z1, Z2, Z3) enthalten, die Nutzerklassen zugeordnet sind, zur Prüfung in einer Auswerteeinheit (60) in der jeweiligen Mobilstation (5, 10, 15, 20), ob für einen Zugriff auf einen wahlfreien Zugriffskanal ein von der Basisstation (100) übertragener Zugriffsschwellwert (S) für die jeweilige Nutzerklasse umfasst ist, so dass
- für eine Mobilstation (5, 10, 15, 20), für die aufgrund der ihrer Nutzerklasse zugeordneten Zugriffsklasseninformation der Zugriffsschwellwert (S) umfasst ist, durch einen Vergleich des Zugriffsschwellwerts (S) mit einer Zufallszahl oder Pseudozufallszahl (R) ein Recht der Mobilstation, auf einen wahlfreien Zugriffskanal zugreifen zu dürfen, ermittelbar ist, und
- für eine Mobilstation (5, 10, 15, 20), für die aufgrund der ihrer Nutzerklasse zugeordneten Zugriffsklasseninformation der Zugriffsschwellwert (S) nicht umfasst ist, aufgrund ihrer Zugehörigkeit zu der Nutzerklasse das Recht besteht, auf den wahlfreien Zugriffskanal zugreifen zu dürfen unabhängig vom Zugriffsschwellwert (S) und damit ohne dessen Auswertung in der jeweiligen Auswerteeinheit (60).

5. System nach Anspruch 4, **dadurch gekennzeichnet, dass** die Basisstation (100) Mittel zum Senden von Zugriffsberechtigungsdaten (45, 50, 55) mit Informationssignalen als Bitmuster aufweist.

6. System nach einem der Ansprüche 4 bis 5, **dadurch gekennzeichnet, dass** die Basisstation (100) Mittel zur Ausgestaltung des Zugriffs auf den wahlfreien Zugriffskanal mittels Belegung der Zugriffsberechtigungsdaten (45, 50, 55) in Abhängigkeit eines Nachrichtenverkehrsaufkommens und damit in Abhängigkeit einer erwarteten Auslastung des wahlfreien Zugriffskanals für die einzelnen Mobilstationen (5, 10, 15, 20) aufweist.

## Claims

1. Mobile station (5, 10, 15, 20) for operation in a mobile radio network, wherein the mobile station (5, 10, 15, 20) comprises:
- means for deriving an association with a user class from an access authorization card (75),
**characterized in that** the mobile station (5, 10, 15, 20) additionally comprises:
- means for ascertaining from received access class information (Z0, Z1, Z2, Z3) access class information that is associated with the user class of the mobile station (5, 10, 15, 20),
- means for checking, using the associated access class information, whether an access threshold value (S) received from a base station (100) for accessing a random access channel is included for the user class associated with the mobile station or whether the mobile station, on the basis of its association with the user class, is permitted to access the random access channel independent of the access threshold value (S),
- means for ascertaining its access authorization for the random access channel, if the mobile station is not permitted to access the random access channel without evaluation of the access threshold value (S), by means of a comparison of the access threshold value (S) with a random or pseudorandom number (R).

2. Mobile station according to Claim 1, **characterized in that** the mobile station comprises means for accessing the random access channel, so that if the mobile station is not permitted access without evaluation of the access threshold value (S), the random access channel is accessed on the basis of the comparison result.

3. Mobile station according to Claim 1, **characterized in that** the mobile station comprises an evaluation unit (60) and means for accessing the random access channel, so that if the mobile station, on the basis of its association with the user class, is permitted to access the random access channel, its access authorization is obtained independent of the access threshold value (S) and hence without evaluation thereof in the evaluation unit (60).

4. System having a base station (100) and at least one mobile station (5, 10, 15, 20), wherein the base station (100) comprises means for sending access authorization data (45, 50, 55) with information signals to mobile stations (5, 10, 15, 20) in a cell defined by said base station, wherein each mobile station (5, 10, 15, 20) may be associated with a user class (35, 40),
**characterized in that** the system is configured such that the access authorization data (45, 50, 55) contains access class information (Z0, Z1, Z2, Z3) that is associated with user classes, for the purpose of checking, in an evaluation unit (60) in the respective mobile station (5, 10, 15, 20), whether an access threshold value (S) transmitted by the base station (100) for the respective user class is included for access to a random access channel, so that
- for a mobile station (5, 10, 15, 20) for which the access threshold value (S) is included on the basis of the access class information associated with the user class of said mobile station, a comparison of the access threshold value (S) with a random number or pseudorandom number (R) can ascertain a right of the mobile station to be permitted to access a random access channel, and
- for a mobile station (5, 10, 15, 20) for which the access threshold value (S) is not included on the basis of the access class information associated with the user class of said mobile station, the association of said mobile station with the user class means that there is the right to be permitted to access the random access channel independent of the access threshold value (S) and hence without evaluation of said access threshold value in the respective evaluation unit (60).

5. System according to Claim 4, **characterized in that** the base station (100) comprises means for sending access authorization data (45, 50, 55) with information signals as bit patterns.

6. System according to either of Claims 4 and 5, **characterized in that** the base station (100) comprises means for configuring the access to the random access channel by means of use of the access authorization data (45, 50, 55) on the basis of a message traffic volume and hence on the basis of an expected utilization level of the random access channel for the individual mobile stations (5, 10, 15, 20).

## Revendications

1. Station mobile (5, 10, 15, 20) destinée à fonctionner dans un réseau radio mobile, dans laquelle la station mobile (5, 10, 15, 20) comporte :
- des moyens destinés à extraire une appartenance à une classe d'utilisateurs d'une carte d'autorisation d'accès (75),
**caractérisée en ce que** la station mobile (5, 10, 15, 20) comporte en outre :
- des moyens destinés à déterminer à partir d'informations de classes d'accès (Z0, Z1, Z2, Z3) reçues une information de classes d'accès qui est associée à la classe d'utilisateurs de la station mobile (5, 10, 15, 20),
- des moyens destinés à vérifier, sur la base de l'information de classes d'accès associée, si, pour la classe d'utilisateurs correspondant à la station mobile, une valeur de seuil d'accès (S) reçue par une station de base (100) est satisfaite pour un accès à un canal d'accès partageable ou si la station mobile, sur la base de son appartenance à la classe d'utilisateurs, doit accéder au canal d'accès partageable indépendamment de la valeur de seuil d'accès (S),
- des moyens destinés à déterminer son autorisation d'accès au canal d'accès partageable dans le cas où la station mobile ne peut accéder au canal d'accès partageable sans évaluation de la valeur de seuil d'accès (S), au moyen d'une comparaison entre la valeur de seuil d'accès (S) et un nombre aléatoire ou pseudo-aléatoire (R).

2. Station mobile selon la revendication 1, **caractérisée en ce que** la station mobile comporte des moyens destinés à accéder au canal d'accès partageable de manière à ce que, dans le cas où la station mobile ne peut pas effectuer d'accès sans évaluation de la valeur de seuil d'accès (S), un accès au canal d'accès partageable soit effectué en fonction du résultat de la comparaison.

3. Station mobile selon la revendication 1, **caractérisée en ce que** la station mobile comporte une unité d'évaluation (60) et des moyens destinés à accéder au canal d'accès partageable de manière à ce que, dans le cas où la station mobile peut accéder au canal d'accès partageable sur la base de son appartenance à la classe d'utilisateurs, il en résulte qu'elle est autorisée à effectuer un accès indépendamment de la valeur de seuil d'accès (S) et par conséquent, sans évaluation de cette dernière dans l'unité d'évaluation (60).

4. Système comportant une station de base (100) et au moins une station mobile (5, 10, 15, 20), dans lequel la station de base (100) comporte des moyens destinés à envoyer des données d'autorisation d'accès (45, 50, 55) à l'aide de signaux d'information à des stations mobile (5, 10, 15, 20) se trouvant dans une cellule desservie par celle-ci,
dans lequel chaque station mobile (5, 10, 15, 20) peut appartenir à une classe d'utilisateurs (35, 40), **caractérisé en ce que** le système est conçu de manière à ce que les données d'autorisation d'accès (45, 50, 55) contiennent des informations de classes d'accès (Z0, Z1, Z2, Z3) qui sont associées à des classes d'utilisateurs, pour vérifier, dans une unité d'évaluation (60) contenue dans la station mobile (5, 10, 15, 20) respective si, pour un accès à un canal d'accès partageable, une valeur de seuil d'accès (S) transmise par la station de base (100) est satisfaite pour la classe d'utilisateurs respective, de manière à ce que :
- pour une station mobile (5, 10, 15, 20) pour laquelle la valeur de seuil d'accès (S) est satisfaite sur la base de l'information de classes d'accès associée à sa classe d'utilisateurs, par une comparaison de la valeur de seuil d'accès (S) à un nombre aléatoire ou à un nombre pseudo-aléatoire (R), une autorisation d'accès de la station mobile à un canal d'accès partageable puisse être déterminée, et
- pour une station mobile (5, 10, 15, 20) pour laquelle la valeur de seuil d'accès (S) n'est pas satisfaite sur la base de l'information de classes d'accès associée à sa classe d'utilisateurs, l'autorisation consiste au fait de pouvoir accéder au canal d'accès partageable indépendamment de la valeur de seuil d'accès (S) et par conséquent, sans évaluation de cette dernière dans l'unité d'évaluation (60) respective.

5. Système selon la revendication 4, **caractérisé en ce que** la station de base (100) comporte des moyens destinés à envoyer des données d'autorisation d'accès (45, 50, 55) au moyen de signaux d'information sous la forme de configurations binaires.

6. Système selon l'une quelconque des revendications 4 à 5, **caractérisé en ce que** la station de base (100) comporte des moyens destinés à réaliser l'accès au canal d'accès partageable au moyen d'une affectation des données d'autorisation d'accès (45, 50, 55) en fonction de la survenue d'un échange de messages, et par conséquent, en fonction d'un taux d'utilisation du canal d'accès partageable pour les stations mobiles (5, 10, 15, 20) individuelles.
